(19) Europäisches Patentamt
European Patent Office
Office européen des brevets

(11) **EP 3 574 198 B1**

(12) **FASCICULE DE BREVET EUROPEEN**

(45) Date de publication et mention
de la délivrance du brevet:
**17.03.2021 Bulletin 2021/11**

(51) Int Cl.:
***F02C 7/32*** (2006.01)          ***F02C 9/30*** (2006.01)
***F02C 7/22*** (2006.01)

(21) Numéro de dépôt: **18704051.4**

(22) Date de dépôt: **22.01.2018**

(86) Numéro de dépôt international:
**PCT/FR2018/050147**

(87) Numéro de publication internationale:
**WO 2018/138428 (02.08.2018 Gazette 2018/31)**

(54) **DISPOSITIF D'ENTRAÎNEMENT D'UNE POMPE À CARBURANT POUR TURBOMACHINE**

VORRICHTUNG ZUR ANSTEUERUNG EINER KRAFTSTOFFPUMPE FÜR EINE TURBOMASCHINE

DEVICE FOR DRIVING A FUEL PUMP FOR A TURBOMACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.01.2017 FR 1750742**

(43) Date de publication de la demande:
**04.12.2019 Bulletin 2019/49**

(73) Titulaires:
• **Safran Aircraft Engines**
  **75015 Paris (FR)**
• **Safran Electrical & Power**
  **31702 Blagnac Cedex (FR)**

(72) Inventeurs:
• **DE WERGIFOSSE, Huguette**
  **77550 Moissy-Cramayel (FR)**
• **DE WERGIFOSSE, Eric**
  **31702 Blagnac Cedex (FR)**

(74) Mandataire: **Gevers & Orès**
**Immeuble le Palatin 2**
**3 Cours du Triangle**
**CS 80165**
**92939 Paris La Défense Cedex (FR)**

(56) Documents cités:
EP-A1- 1 359 299     EP-A2- 2 088 302
FR-A1- 2 934 321     US-A1- 2016 186 670

**Description**

**Domaine de l'invention:**

La présente invention se rapporte au domaine des turbomachines. Elle concerne plus particulièrement le circuit d'alimentation en carburant et la régulation du débit de carburant dans ce circuit.

**Etat de la technique** :

L'état de la technique comprend les demandes de brevet publiées sous les numéros FR-A1-2 934 321, EP-A1-1 359 299, US-A1-2016/186670 et EP-A2-2 088 302.

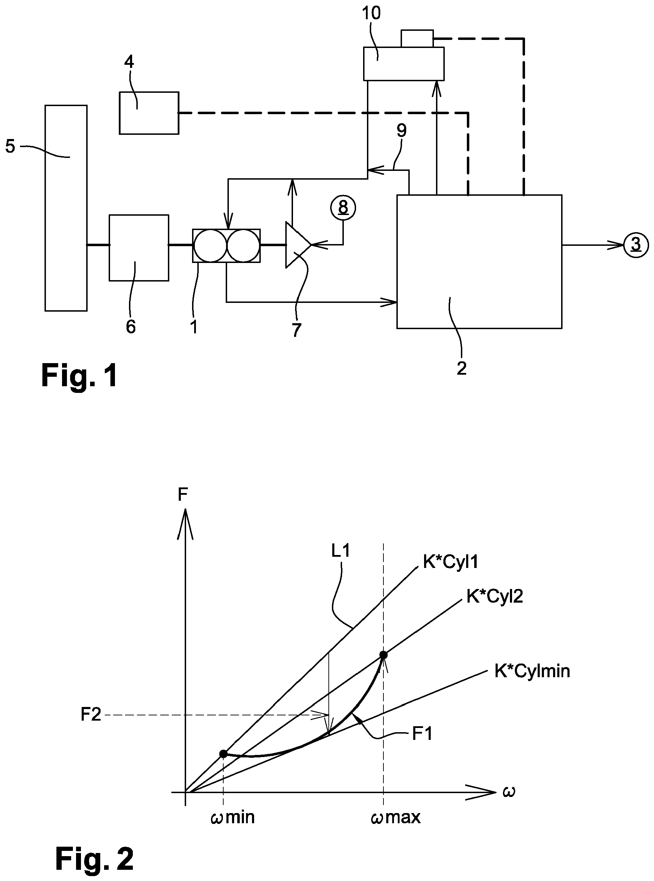

Les turbomachines installées sur un aéronef sont équipées d'un circuit d'alimentation en carburant, délivrant le carburant à la chambre de combustion, qui doit être régulé en fonction du besoin selon les conditions de vol. En référence à la figure 1, le circuit de carburant comprend généralement une pompe 1 principale haute pression de type volumétrique qui envoie le carburant vers un groupe hydromécanique 2 avant l'injection vers la chambre de combustion 3. L'ensemble est agencé pour assurer, en sortie vers la chambre de combustion, un débit de carburant adapté au besoin. Un boîtier de commande 4 pilote généralement le groupe hydromécanique 2 pour qu'il adapte le débit envoyé par la pompe 1 au besoin de la chambre de combustion 3.

En général, la pompe 1 est entraînée par un arbre de sortie du boîtier d'accessoires 5 de la turbomachine, lui-même entraîné par un axe du corps primaire de la turbomachine, non représenté sur la figure 1. Un dispositif de transmission 6 est généralement installé entre l'arbre du boîtier de relais d'accessoires 5 et la pompe 1 pour adapter les régimes de rotation entre ces deux équipements. Ce dispositif détermine un rapport K entre la vitesse de la pompe 1 et la vitesse de rotation $\omega$ de l'axe moteur de la turbomachine. Ce dispositif entraîne généralement aussi un moyen d'alimentation 7 du circuit à partir des réservoirs de carburant 8.

La caractéristique linéaire Cyl de la pompe 1 entre le débit de carburant et sa vitesse d'entraînement dépend en particulier de sa cylindrée. La pompe 1 doit être dimensionnée de telle manière que cette cylindrée permette de délivrer les débits requis pour tous les régimes de fonctionnement de la turbomachine, donc de vitesse de l'arbre de sortie du boîtier de relais d'accessoires 5, aussi bien à basse vitesse qu'à haute vitesse.

Comme on peut le voir sur la figure 2, représentant les variations de débit F en fonction de la vitesse de rotation $\omega$ de l'axe moteur de la turbomachine, le besoin F1 en carburant varie de façon non linéaire en fonction du régime de la turbomachine. La vitesse de rotation $\omega$ de l'axe moteur de la turbomachine varie entre une valeur minimale $\omega$min, pour l'allumage de la turbomachine, et une valeur maximale $\omega$max pour le décollage. Le régime correspondant à un vol de croisière se situe entre ces deux extrêmes.

Suivant l'application, le point crucial est situé soit à l'allumage basse vitesse soit au décollage, à haute vitesse. Sur la figure 2, ce point crucial se situe au niveau de l'allumage, il faut choisir la cylindrée de la pompe de telle manière que sa caractéristique linéaire soit égale à la valeur Cyl1, pour assurer un débit suffisant lors de toutes les conditions de vol. Cette valeur Cyl1 peut être significativement supérieure à la valeur minimale Cylmin nécessaire dans certaines conditions de vol, voire à celle Cyl2 nécessaire lors du décollage.

Suivant ce dimensionnement, le débit fourni par la pompe suit donc la droite L1 sur le diagramme débit/vitesse de rotation de la figure 2. Pendant une large phase de vitesse d'entraînement, notamment en vol de croisière, la pompe délivre donc un débit supérieur au besoin en débit carburant, donc un surplus F2 de carburant.

Le groupe hydromécanique 2 doit donc renvoyer vers la pompe, par une boucle de recirculation 9, le surplus de carburant F2 par rapport au besoin.

Ce problème de régulation du débit de carburant est encore accentué lorsque le circuit de carburant est utilisé, comme indiqué sur la figure 1, pour actionner des géométries variables 10 de la turbomachine. L'actionnement des géométries variables 10 crée des variations de besoin en carburant dans le circuit qui doivent être prises en compte dans le dimensionnement de la pompe 1, dans le fonctionnement du groupe hydromécanique 2 et dans les caractéristiques de la boucle de recirculation 9.

Cette architecture du système d'alimentation en carburant présente plusieurs inconvénients. Le surplus de débit injecté par la pompe 1 induit un surplus de prélèvement de puissance sur le boîtier de relais d'accessoires 5 par rapport au besoin, préjudiciable au rendement de la turbomachine. Le surplus de puissance mécanique se transforme en puissance thermique dissipée dans la boucle de recirculation 9 qui doit être évacuée. Cela a une influence négative sur la taille et la masse du circuit de carburant, notamment pour des échangeurs thermiques, non représentés, placés pour évacuer la chaleur dans ce circuit.

L'invention a pour objectif de remédier au moins à certains de ces inconvénients.

**Exposé de l'invention** :

A cet effet, l'invention concerne un dispositif de transmission destiné à entraîner une pompe à carburant pour une turbomachine à partir d'un axe moteur de ladite turbomachine, comportant un réducteur à train épicycloïdal comprenant trois éléments, un planétaire central, une couronne externe et un porte-satellites dont les satellites s'engrènent avec le planétaire et la couronne, un premier des trois éléments étant destiné à être relié à l'axe moteur et un second des trois éléments étant destiné à être couplé à un arbre de la pompe, lesdits trois éléments sont mobiles en rotation autour d'un axe du réducteur, le dispositif comporte en outre des premiers moyens électriques agencés pour entraîner en rotation le troisième desdits éléments du réducteur, de manière à modifier un rapport de vitesse de rotation entre le premier et le second desdits éléments, caractérisé en ce que des seconds moyens électriques sont couplés au premier ou au second desdits éléments du réducteur, les premier et second moyens électriques étant agencés pour transférer de la puissance électrique de manière réversible de l'un à l'autre.

Le dispositif de transmission ainsi agencé permet de modifier la vitesse de la pompe pour un régime moteur donné de la turbomachine. Ainsi, on peut adapter la vitesse de la pompe pour qu'elle délivre le bon débit de carburant aux différents points de fonctionnement de la turbomachine. En se fixant une vitesse maximale admissible de la pompe, la cylindrée de la pompe ne dépend plus que du point de fonctionnement au décollage et non de celui à l'allumage.

D'un point de vue énergétique, la puissance prélevée sur l'axe moteur sera toujours strictement égal au besoin minimum grâce au transfert de puissance. On obtient donc un gain sur la puissance prélevée pour le fonctionnement du circuit carburant.

De plus, le transfert de puissance réversible entre les deux moteurs permet de faire fonctionner le dispositif sans besoin de puissance externe lors du pilotage de la pompe, le second moteur prélevant la puissance nécessaire au fonctionnement du premier moteur, lorsque que ce dernier fonctionne en moteur. Le transfert de puissance permet de faire fonctionner les deux moteurs dans les deux modes aussi bien en mode moteur qu'en mode générateur. Suivant le point de fonctionnement le premier moteur peut soit être en mode moteur ou en mode générateur et le second moteur en mode générateur ou en mode moteur.

Par ailleurs, la réactivité du dispositif de transmission pour adapter la vitesse de la pompe permet de simplifier le circuit de carburant. Cela permet également de diminuer très fortement le dimensionnement de la boucle de recirculation de carburant, voire de la supprimer.

Selon un premier mode de réalisation, le premier desdits éléments du réducteur est la couronne, le second desdits éléments est le planétaire et le troisième desdits éléments est le porte-satellites, et les seconds moyens électriques sont couplés au premier desdits trois éléments.

Selon un autre type de configuration de réalisation, les seconds moyens électriques sont couplés au second des trois éléments du réducteur.

Une étude des inventeurs montre que le fait de coupler les seconds moyens électriques et la pompe au même élément du réducteur, plutôt que de coupler les seconds moyens électriques à l'axe moteur, permet de minimiser au maximum la puissance transférée entre les deux moteurs.

Dans une première variante de ce type de configuration, le premier desdits trois éléments est la couronne, le second desdits trois éléments le planétaire, et le troisième desdits trois éléments est le porte-satellites.

Dans une variante préférée de ce type de configuration, le premier desdits trois éléments est la couronne, le second desdits trois éléments est le porte-satellites, et le troisième desdits trois éléments est le planétaire.

Cette variante préférée permet de fonctionner avec une vitesse de la pompe inférieure à celle de l'arbre de sortie du boîtier de relais d'accessoires. Cette variante correspond à la valeur minimale de transfert de puissance.

Dans un perfectionnement de cette variante, le dispositif comprend au moins une roue reliée à l'arbre moteur qui engrène par l'extérieur à la couronne du réducteur.

De préférence, au moins une roue complémentaire est reliée à l'un desdits premier et second moyens électriques et engrène sur le porte-satellites.

Ce perfectionnement permet, notamment, de placer les divers composants du dispositif de part et d'autre de la transmission du boîtier de relais d'accessoires.

L'invention concerne également un système d'alimentation en carburant d'une turbomachine comportant une pompe agencée pour fournir un débit de carburant qui est une fonction croissante de la vitesse de rotation d'un arbre de ladite pompe et un dispositif de transmission tel que décrit précédemment, dans lequel le second desdits éléments est couplé audit arbre de la pompe.

L'invention concerne aussi une turbomachine comportant un tel système d'alimentation.

Un boîtier de relais d'accessoires est de préférence placé entre l'axe moteur et le premier desdits éléments du réducteur.

L'invention concerne également un procédé de régulation d'une pompe à carburant pour turbomachine dans un aéronef, un arbre de la pompe étant entraîné par un axe moteur de la turbomachine par des moyens utilisant un dispositif de transmission tel que décrit précédemment, caractérisé en ce qu'on modifie la vitesse de rotation de l'arbre de la pompe en pilotant la vitesse de rotation du troisième élément du réducteur par les premiers moyens électriques, de manière à ce que le débit de carburant délivré par la pompe soit adapté aux conditions de vol de l'aéronef, et en ce que l'on pilote les seconds moyens électriques de manière à fournir de l'énergie électrique aux premiers moyens électriques lorsqu'ils sont moteurs et/ou à absorber l'énergie électrique fournie par les premiers moyens électriques lorsqu'ils sont générateurs.

**Brève description des figures** :

La présente invention sera mieux comprise et d'autres détails, caractéristiques et avantages de la présente invention apparaîtront plus clairement à la lecture de la description d'un exemple non limitatif qui suit, en référence aux dessins annexés sur lesquels :

la figure 1 présente très schématiquement un circuit de carburant selon l'état de la technique ;
la figure 2 présente un diagramme en vitesse de rotation et débit montrant l'écart entre le débit fourni par la pompe de carburant et le besoin pour un circuit selon la figure 1;
la figure 3 présente très schématiquement une demi coupe d'une turbomachine pouvant utiliser l'invention ;
la figure 4 présente des vues en éclaté et un schéma pour un réducteur à train épicycloïdal pouvant être utilisé par l'invention ;
la figure 5 présente le schéma d'un premier mode de réalisation d'un dispositif de transmission selon l'invention entre la turbomachine et la pompe utilisant un réducteur de la figure 4 ;
la figure 6 présente le schéma d'un deuxième mode de réalisation d'un dispositif de transmission selon l'invention entre la turbomachine et la pompe utilisant un réducteur de la figure 4 ;
la figure 7 présente le schéma d'un troisième mode de réalisation d'un dispositif de transmission selon l'invention entre la turbomachine et la pompe utilisant un réducteur de la figure 4 ;
la figure 8 présente le schéma d'un perfectionnement du mode de réalisation décrit à la figure 7; et
la figure 9 présente très schématiquement un circuit de carburant utilisant un dispositif de transmission selon l'invention.

Les éléments ayant les mêmes fonctions dans les différentes mises en œuvre ont les mêmes références dans les figures.

**Description d'un mode de réalisation** :

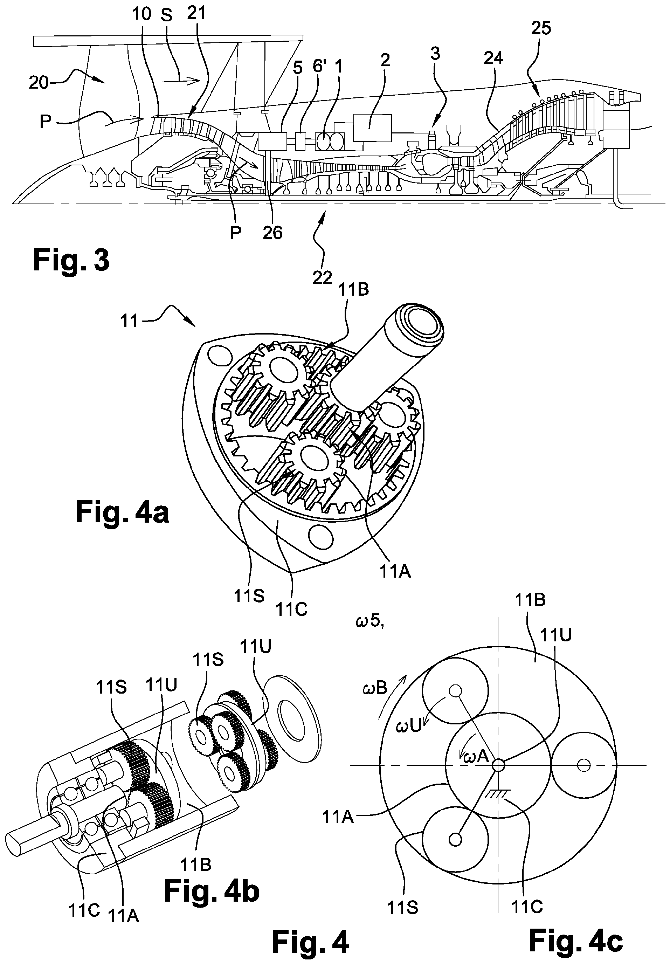

Dans une turbomachine, par exemple une turbomachine à double flux représentée sur la figure 3, le flux d'air en sortie de soufflante 20 se divise en un flux primaire P entrant dans le moteur et en un flux secondaire S entourant ce dernier. Le flux primaire traverse alors des compresseurs basse pression 21 et haute pression 22, la chambre de combustion 3 alimentée par le circuit de carburant précédemment évoqué, puis des turbines haute pression 24 et basse pression 25. Généralement, l'ensemble des compresseurs haute pression 22 et des turbines haute pression 24 tourne d'un bloc sur un axe commun 26 et forme la partie moteur de la turbomachine avec la chambre de combustion.

Généralement, l'axe moteur 26 entraîne le boîtier de relais d'accessoires 5 qui peut comporter plusieurs trains d'engrenages reliés à des arbres de sortie pour entraîner divers équipements. Ici un des arbres de sortie du boîtier d'engrenage entraîne, par un dispositif de transmission 6', la pompe volumétrique 1 qui alimente le groupe hydromécanique 2 injectant le carburant dans la chambre de combustion 3. Généralement aussi, le boîtier de relais d'accessoires fait le lien entre l'axe moteur 26 et un démarreur/générateur, non représenté sur cette figure, qui peut être utilisé pour entraîner la turbomachine lors des phases de démarrage ou générer un courant électrique lorsque la turbomachine est allumée.

La turbomachine peut aussi comporter des géométries variables 10, précédemment évoquées, que l'on peut activer dans certaines conditions d'utilisation. Ces géométries variables 10 sont, par exemple, des aubes à calage variable en entrée de compresseur basse pression.

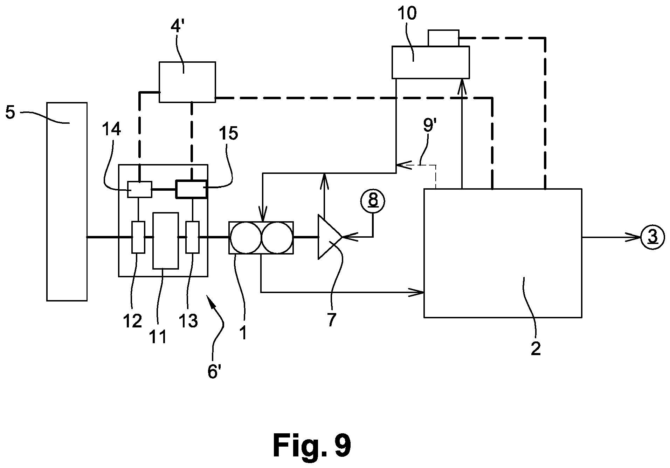

Ici, en référence à la figure 9, le système d'alimentation en carburant comporte un dispositif de transmission 6' entre le boîtier de relais d'accessoires 5 et la pompe 1 différent du système de la figure 1. La pompe 1 peut être de même nature que pour la solution classique. C'est une pompe volumétrique rotative, dont le débit est une fonction croissante de la vitesse de rotation $\omega 1$, apte à fournir le débit nécessaire à l'injection dans la chambre de combustion 3 et à mettre le circuit carburant en pression. De préférence, elle a une caractéristique linéaire Cyl reliant le débit de sortie à la vitesse de rotation $\omega 1$.

Le dispositif de transmission 6' comporte un réducteur à train épicycloïdal dont on utilise les propriétés pour adapter la vitesse de rotation de la pompe 1 au besoin de débit de carburant suivant les différents régimes de fonctionnement de la turbomachine.

En référence, à la figure 4, le réducteur à train épicycloïdal 11 comporte :

- un planétaire central 11A, agencé pour pouvoir tourner autour de l'axe du train à une vitesse ωA ;
- des satellites 11S s'engrenant avec le planétaire central 11A et portés par un porte-satellites 11U, le porte-satellites 11U étant agencé pour pouvoir tourner autour de l'axe du train à une vitesse ωU ;
- Une couronne 11B externe avec laquelle les satellites 11S s'engrènent également, la couronne 11B étant agencée pour pouvoir tourner autour de l'axe du train à une vitesse ωB.

Une caractéristique du réducteur à train épicycloïdal 11 est donc que ses trois éléments, le planétaire central 11A, le porte-satellites 11U et la couronne 11B, sont capables de tourner. Ici, par exemple, la couronne 11B est libre de tourner à l'intérieur d'un carter fixe 11C protégeant le réducteur 11.

Le fonctionnement du train du réducteur 11 est régi par la formule de Willis qui montre qu'il s'agit d'un mécanisme à deux degrés de liberté et que la connaissance des vitesses de rotation de deux éléments parmi le planétaire central 11A, le porte-satellites 11U et la couronne 11B, permet le calcul de la vitesse de rotation du troisième.

Rotation du planétaire central 11A : ωA
Rotation du porte-satellites 11U : ωU
Rotation de la couronne 11B : ωB

$$\text{Formule de WILLIS :} \quad (\omega A - \omega U) / (\omega B - \omega U) = k \quad \text{ou} \quad \omega A - k^* \omega B + (k-1)^* \omega U = 0$$

Dans la formule de Willis, le facteur k, aussi appelé raison du train, est une constante déterminée par la géométrie des engrenages. Pour le réducteur 11 de la figure 4, k = - ZB/ZA, où ZA est le nombre de dents du planétaire central A et ZB le nombre de dents de la couronne B. Le facteur k est donc négatif avec un module inférieur à 1.

On comprend donc que, si l'arbre de sortie du boîtier de relais d'accessoires 5 est couplé à l'un des trois éléments et l'arbre de la pompe 1 est couplé à un deuxième élément, on peut faire varier la vitesse de rotation de la pompe 1 pour une vitesse donnée de l'arbre du boîtier 5 en faisant varier la vitesse de rotation du troisième élément.

Selon l'invention, un premier moteur électrique 12 est couplé audit troisième élément pour piloter la vitesse de rotation de ce dernier.

Six combinaisons sont possibles pour positionner ces trois équipements, le boîtier 5 de relais d'accessoires, la pompe 1 et le premier moteur 12, par rapport aux trois éléments du réducteur à train épicycloïdal 11.

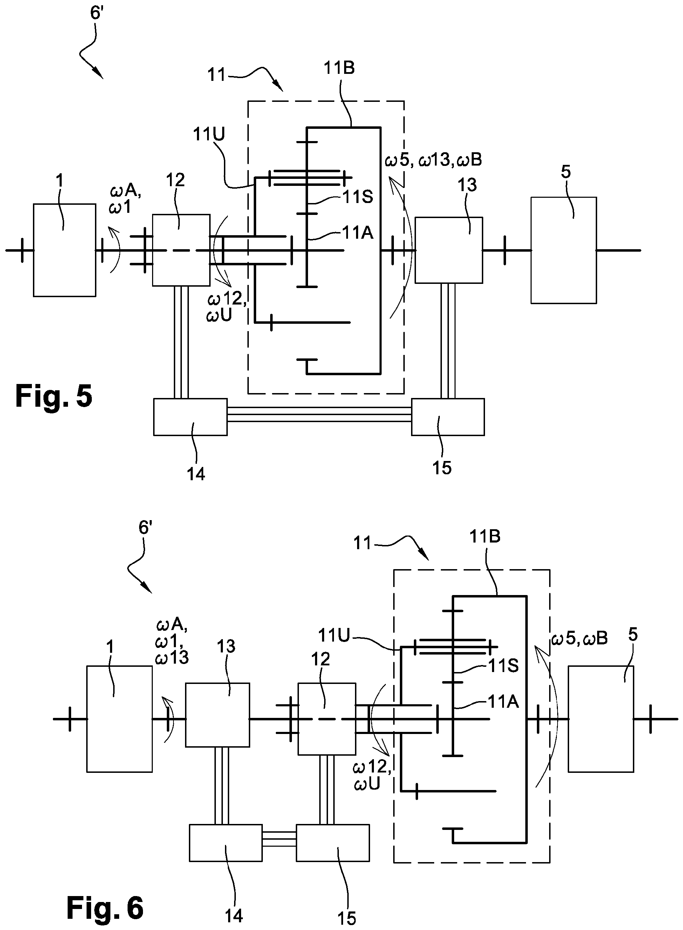

La figure 5 illustre une configuration particulière où le boîtier 5 de relais d'accessoires est relié à la couronne 11B, la pompe 1 au planétaire central 11A et le moteur électrique 12 au porte-satellites 11U.

Selon l'invention également, on couple un second moteur 13 à l'un des éléments du réducteur 11 qui n'est pas couplé au premier moteur 12. Sur la figure 5, il s'agit de la couronne 11B, couplée par ailleurs au boîtier 5.

Le premier moteur 12 et le second moteur 13 comportent chacun un stator et un rotor. Lesdits moteurs 12, 13 sont pilotables en couple appliqué sur leur rotor et en vitesse de rotation ω12, ω13 de leur rotor. Il s'agit par exemple de moteurs asynchrones en courant alternatif. Le couple et la vitesse de chaque moteur 12, 13 sont alors pilotés par la puissance électrique et la fréquence du courant envoyé par un convertisseur 14, 15 dédié à chacun.

Par ailleurs, le second moteur 13 est électriquement lié au premier moteur 12 par l'intermédiaire desdits convertisseurs de tension réversibles 14, 15, afin de faire passer de la puissance de l'un à l'autre.

La position du second moteur 13 multiplie par deux le nombre de combinaisons possibles pour le dispositif 6'. On obtient ainsi douze combinaisons répertoriées dans le tableau ci-dessous.

Ce tableau indique également la fonction donnant la vitesse ω1 de la pompe 1 à partir de la vitesse ω5 de l'arbre du boîtier 5 et de la vitesse ω12 du premier moteur 12. La vitesse de rotation ω13 du second moteur 13 est déterminée par la vitesse de rotation de l'équipement avec lequel il couplé en série sur le réducteur 11, soit l'arbre de la pompe 1, soit l'arbre de sortie du boîtier 5. Dans ce tableau, l'option 1 correspond aux cas où le second moteur 13 est couplé en série avec la pompe 1 sur le même élément du réducteur 11, et l'option 2 correspond aux cas où le second moteur 13 est couplé en série avec l'arbre de sortie du boîtier 5 de relais d'accessoires sur le même élément du réducteur 11.

Tableau 1.

| Liaison Boîtier/Pompe/ Premier moteur | | | Vitesse pompe | Liaison second moteur | |
|---|---|---|---|---|---|
| Boîtier 5 relié au porte-satellites 11U | | | | Option 1 | Option 2 |
| | Moteur 12 | Pompe 1 | | | |
| 1A | couronne 11B | planétaire 11A | $\omega 1 = (1-k)^*\omega 5 + k\,^*\omega 12$ | planétaire A | porte-satellites 11U |
| 1B | planétaire 11A | couronne 11B | $\omega 1 = -\omega 5^*(1-k)/k + \omega 12/k$ | couronne B | porte-satellites 11U |
| Boîtier 5 relié à la couronne 11B | | | | Option 1 | Option 2 |
| | Moteur 12 | Pompe 1 | | | |
| 2A | porte-satellites 11U | planétaire 11A | $\omega 1 = k\,^*\omega 5 +(1-k)\,^*\omega 12$ | planétaire A | couronne B |
| 2B | planétaire 11A | porte-satellites 11U | $\omega 1 = -\omega 5^*k/(1-k) + \omega 12/(1-k)$ | porte-satellites 11U | couronne B |
| Boîtier 5 relié au planétaire 11A | | | | Option 1 | Option 2 |
| | Moteur 12 | Pompe 1 | | | |
| 3A | couronne 11B | porte-satellites 11U | $\omega 1 = \omega 5/(1-k) - \omega 12^*k/(1-k)$ | porte-satellites 11U | planétaire A |
| 3B | porte-satellites 11U | couronne 11B | $\omega 1 = \omega 5/k - \omega 12^*(1-k)/k$ | couronne B | planétaire A |

Par ailleurs, en référence à la figure 9, le système d'alimentation en carburant diffère également de celui de la figure 1 en ce que le boîtier de commande 4' est relié au convertisseur 14, pour piloter la vitesse $\omega 12$ et le couple du premier moteur 12 en vue d'adapter la vitesse $\omega 1$ de la pompe 1, ainsi qu'au convertisseur 15, pour piloter le couple du second moteur 13 en vue de gérer le transfert de puissance entre les deux moteurs.

L'étude du réducteur 11 montre que le couple CA s'exerçant sur le planétaire 11A, le couple CB s'exerçant sur la couronne 11B et le couple CU s'exerçant sur le porte-satellites 11U sont reliés par deux relations :

$$CA + CB + CU = 0$$

(équilibre du train)

$$\omega A\,^*CA + \omega B\,^*CB + \omega U\,^*CU = 0$$

(équilibre de puissance)

Compte tenu des relations liant les vitesses de rotation de ces éléments, cela permet de calculer les couples s'exerçant sur deux éléments du réducteur 11 connaissant le troisième.

Le second moteur 13, étant mis en série avec la pompe 1 ou le boîtier 5, voit sa vitesse de rotation déterminée comme étant égale à celle de cet équipement.

On comprend cependant qu'il apporte un degré de liberté supplémentaire au système suivant le couple qu'il exerce et qui vient s'ajouter à celui de la pompe 1 ou du boîtier sur l'élément correspondant du réducteur 11.

Ce degré de liberté supplémentaire peut être utilisé pour assurer un transfert de puissance avec le premier moteur : soit fournir de la puissance lorsque le premier moteur 12 intervient pour accélérer la pompe1 par rapport à l'entraînement du boîtier 5, soit absorber de la puissance lorsque le premier moteur 12 intervient pour freiner la pompe1.

Le dispositif dépend de plusieurs paramètres dont : la raison k du train épicycloïdal du réducteur 11 ; le rapport de la vitesse de rotation $\omega 5$ en sortie du boîtier 5 par rapport à la vitesse de rotation de l'axe moteur 26 de la turbomachine ; la caractéristique linéaire Cyl et la valeur maximale de la vitesse de rotation $\omega 1$ de la pompe 1.

Un choix parmi les douze configurations doit être fait en optimisant ces paramètres pour atteindre en particulier les objectifs suivants :

- permettre à la pompe 1 de tourner à une vitesse $\omega 1$ qui s'ajuste pour fournir un débit Cyl* $\omega 1$ qui correspond au besoin F1, tel que représenté par exemple dans la figure 2, lorsque la vitesse de rotation de l'axe moteur 26 de la turbomachine varie entre ses valeurs minimale $\omega min$ et maximale $\omega max$ ;
- minimiser les transferts de puissance entre le premier moteur 12 et le second moteur 13 pour ajuster la vitesse $\omega 1$ de la pompe 1 sur la plage de fonctionnement de la turbomachine.

Toutes les combinaisons du tableau 1 ne permettent pas forcément d'atteindre ces objectifs.

Par ailleurs, les contraintes technologiques sur les équipements utilisés impliquent généralement que :

- la vitesse $\omega 1$ de la pompe 1 doit être inférieure à celle $\omega 5$ de l'arbre de sortie du boîtier de relais d'accessoires 5 ; et
- la vitesse $\omega 12$ du moteur électrique 12 doit être limitée à une valeur maximale..

Une étude particulière d'optimisation de chaque combinaison est donc nécessaire pour motiver un choix de mise en œuvre sur une turbomachine. Les inventeurs ont fait cette étude systématique sur un exemple de turbomachine et ont trouvé que les combinaisons décrites ci-dessous présentent divers avantages à considérer pour une intégration dans une turbomachine.

En référence à la figure 5, la configuration « 2A-Option 2 » correspond aux liaisons suivantes :

- boîtier 5 relié à la couronne 11B ;
- pompe 1 reliée au planétaire 11A ;
- premier moteur 12 relié au porte-satellites 11U ;
- second moteur 13 relié à la couronne 11B, en série avec le boîtier 5.

Cette configuration permet de répondre à trois contraintes :

- vitesse $\omega 1$ de la pompe 1 inférieure à celle $\omega 5$ de l'arbre de sortie du boîtier de relais d'accessoires 5 ;
- vitesse $\omega 12$ du moteur électrique 12 supérieure à celle $\omega 1$ de la pompe 1 ; et
- possibilité de transfert de puissance entre le premier moteur 12 et le second moteur 13 même lors d'un point de fonctionnement à vitesse nulle de la pompe.

Cependant, cette configuration ne permet pas de minimiser la puissance transmise entre le premier moteur 12 et le second moteur 13.

En référence à la figure 6, la configuration « 2A-Option 1 » correspond aux liaisons suivantes :

- boîtier 5 relié à la couronne 11B ;
- pompe 1 reliée au planétaire 11A ;
- premier moteur 12 relié au porte-satellites 11U ;
- second moteur 13 relié au planétaire 11A, en série avec la pompe 1.

Cette configuration permet de répondre à trois contraintes :

- vitesse $\omega 1$ de la pompe 1 inférieure à celle $\omega 5$ de l'arbre de sortie du boîtier de relais d'accessoires 5 ;
- vitesse $\omega 12$ du moteur électrique 12 supérieure à celle $\omega 1$ de la pompe 1 ; et
- optimisation de la puissance transmise entre le premier moteur 12 et le second moteur 13.

Il est important de prendre en compte une puissance transmise maximale entre le premier moteur 12 et le second moteur 13, de manière à limiter leur taille. Par exemple, limiter ce transfert de puissance à 2KW apparaît comme avantageux pour ce critère.

D'une manière générale, il ressort de l'étude des inventeurs que l'utilisation de l'option 1, couplage du second moteur 13 en série avec la pompe 1, permet une réduction maximale de la puissance transmise entre les deux moteurs 12, 13.

Cependant, la configuration « 2A-Option 1 » de la figure 6 ne permet pas de transfert de puissance entre le premier moteur 12 et le second moteur 13 pour un point de fonctionnement à vitesse nulle de la pompe et transmet une puissance plus faible vers la pompe que la configuration « 2A-Option 2 ».

En se basant sur un modèle particulier de turbomachine, une configuration est susceptible de permettre une optimisation des paramètres pour atteindre un critère d'optimisation de la puissance transmise maximale entre les deux moteurs, en vérifiant les autres critères.

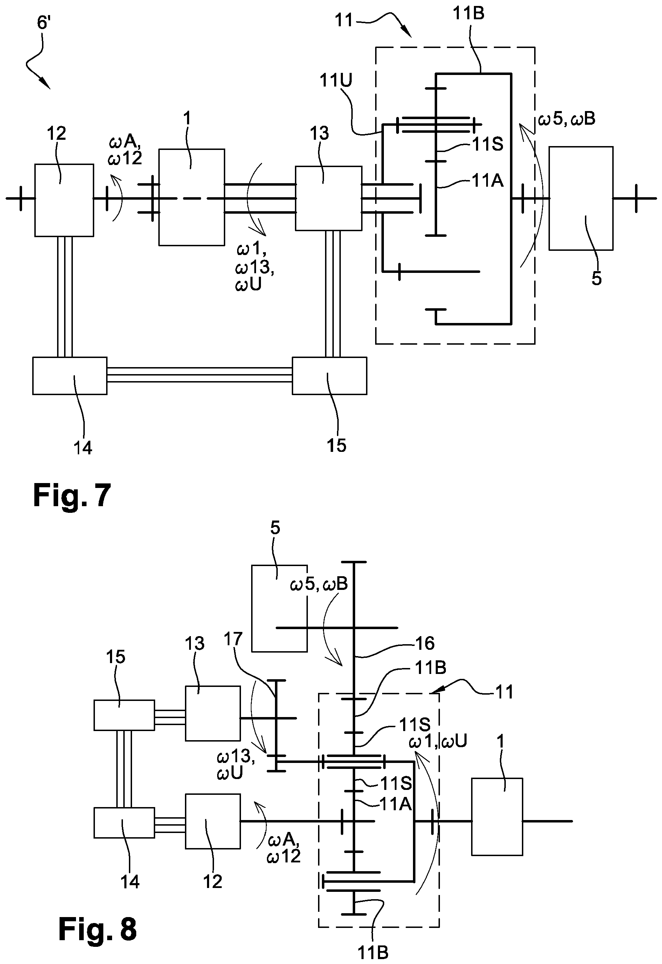

Il s'agit de la configuration « 2B-Option 1 », illustrée en figure 7 et correspondant aux liaisons suivantes :

- boîtier 5 relié à la couronne 11B;
- pompe 1 reliée au porte-satellites 11U ;
- premier moteur 12 relié au planétaire 11A ;
- second moteur 13 relié au porte-satellites 11U, en série avec la pompe 1.

En référence à la figure 8, un perfectionnement de la variante précédente permet d'agencer les composants du dispositif de transmission de part et d'autre du boîtier 5 par le biais de trains d'engrenages complémentaires. Sur l'exemple de la figure 8, l'axe sortant du boîtier d'engrenage 5 entraîne la couronne 11B par l'engrenage d'une roue 16 qui permet de décaler les axes. De même, le moteur 13 est relié au porte-satellites 11U par l'engrenage de la roue 17 sur le porte-satellites.

Le boîtier 5 peut inclure certains de ces engrenages, ce qui permet, comme illustré sur la figure 8, de répartir les équipements de part et d'autre du boîtier 5 de relais d'accessoires et, notamment, de gagner en compacité. La place des moteurs 12 et 13 peut être échangée, ce qui permet de réaliser aussi la configuration 2B option 2.

Eventuellement, le boîtier 5 de relais d'accessoires peut inclure les engrenages du réducteur 11 et réaliser directement le rapport de réduction K entre la vitesse $\omega 1$ de la pompe 1 et la vitesse $\omega$ de l'arbre moteur 26 de la turbomachine.

Par ailleurs, en référence à la figure 9, quelle que soit la configuration choisie pour le dispositif de transmission 6', le circuit de carburant est différent de celui de la figure 1 en ce que le boîtier de commande 4' est relié au premier moteur 12 et au second moteur 13, pour piloter leurs vitesses $\omega 12$, $\omega 13$ en vue d'adapter la vitesse $\omega 1$ de la pompe 1 et d'optimiser le transfert de puissance. Le mode de pilotage des deux moteurs 12, 13 permet leur fonctionnement dans les quatre quadrants, en terme de couple et de vitesse.

Si, par exemple, le dispositif de transmission correspond à la configuration « 2B- Option 1 », la vitesse $\omega 1$ de la pompe 1 est donnée par la formule du tableau 1 :

$$\omega 1 = -\omega 5 * k/(1-k) + \omega 12/(1-k)$$

Suivant que le premier moteur 12 entraîne le planétaire 11A avec une valeur $\omega 12$ positive ou négative la pompe 1 peut être entraînée à une vitesse inférieure ou supérieure à la vitesse $-\omega 5 * k/(1-k)$ qu'elle aurait pour un train 11 avec un planétaire fixe.

Lors du fonctionnement de la turbomachine sur l'aéronef, le boîtier de commande 4' ajuste la vitesse $\omega 1$ de la pompe 1 au besoin en carburant de la chambre d'allumage 3 en faisant varier la vitesse $\omega 12$ du premier moteur 12.

Selon que la vitesse de rotation du moteur 12 est positive ou négative, le moteur 12 apporte de la puissance pour augmenter la vitesse de la pompe 1 ou en récupère pour diminuer cette vitesse. La puissance prélevée sur l'arbre de sortie du boîtier de relais d'accessoires 5 est, dans certaines phases de vol, inférieure au besoin de puissance hydraulique de la pompe 1 et, dans certaines phases de vol, supérieure au besoin de phases de vol.

Le boîtier de commande 4' pilote aussi le second moteur 13, qui tourne à la vitesse $\omega 1$ de la pompe 1, de manière à adapter son couple pour absorber ou injecter la puissance que le premier moteur 12 génère ou utilise.

Lors de la conception de la pompe 1, il n'est donc plus nécessaire de la dimensionner avec une cylindrée correspondant à la valeur maximale de K mais, par exemple, pour une valeur intermédiaire. Si l'on se réfère au cas de la figure 2, par exemple, en se fixant une vitesse maximale admissible pour la pompe 1, on peut dimensionner la pompe 1 pour le point de décollage et non plus pour le point d'allumage, plus contraignant. Cela permet de diminuer la cylindrée de la pompe par rapport à l'état de la technique.

De plus, le système permet de fournir toujours à la pompe 1 la puissance minimale pour répondre au besoin en débit de carburant. Cela a deux conséquences positives.

Premièrement, la puissance prélevée directement sur l'arbre de sortie du boîtier de relais d'accessoires 5 est toujours strictement égale au besoin grâce au transfert de puissance entre les deux moteurs 12, 13.

L'absence de perte provient de ce transfert de puissance électrique, le moteur 12 soit récupérant de l'énergie au travers du dispositif de transmission et la restituant au moteur 13, soit récupérant de l'énergie du moteur 13 et la restituant en mode moteur au dispositif de transmission.

En fonctionnement, le train épicycloïdal se comporte de trois façons différentes.

Premièrement, si la vitesse $\omega 5$ de l'arbre du boîtier 5 est telle que la vitesse $\omega 1$ de la pompe 1 correspond au besoin, la vitesse de pilotage du moteur 12 est nulle et la vitesse de la pompe 1 est reliée à la vitesse de l'arbre du boîtier 5 par le rapport de réduction du train épicycloïdal à vitesse du moteur 12 nulle.

Deuxièmement si la vitesse ω5 de l'arbre du boîtier 5 est telle que la vitesse ω1 de la pompe 1 est supérieure au besoin, le moteur 12 sera piloté pour fonctionner dans un certain sens de rotation en mode générateur, à une vitesse ω12 adaptée pour réduire la vitesse de la pompe 1. L'énergie récupérée sera restituée au moteur 13 fonctionnant en mode moteur.

Troisièmement si la vitesse ω5 de l'arbre du boîtier 5 est telle que la vitesse ω1 de la pompe 1 est inférieure au besoin, le moteur 12 sera piloté pour fonctionner dans l'autre sens de rotation en mode moteur, à une vitesse ω12 pour augmenter la vitesse de la pompe 1. L'énergie restituée au moteur 12 provient de l'énergie récupérée du moteur 13 fonctionnant en mode générateur.

La puissance prélevée sur la turbomachine est donc inférieure à celle qui est prélevée dans une architecture telle que celle décrite dans la figure 1.

De plus, la taille et la masse des moteurs capables d'absorber ou de restituer la puissance transférée entre eux sont inférieures à celle d'une batterie qui interviendrait comme réservoir d'énergie électrique. Cette configuration avec deux moteurs permet donc d'atteindre les objectifs en minimisant la taille et la masse du dispositif de transmission 6' entre le boîtier de relais d'accessoires 5 et la pompe 1.

Deuxièmement, le débit délivré par la pompe 1 étant adapté au besoin, il n'y a plus besoin d'une boucle de recirculation sortant du groupe hydromécanique de régulation 2 pour les phases de fonctionnement stationnaire. Il n'y a donc plus de besoin d'évacuer le surplus d'énergie thermique créé par le surplus de débit. Cela permet donc de simplifier le circuit de carburant et de minimiser la taille des échangeurs thermiques sur le circuit de carburant.

En référence à la figure 9, le circuit de carburant peut conserver une boucle de recirculation 9' mais cette dernière est seulement dimensionnée pour permettre au circuit de s'adapter lors des transitoires, en tenant compte des temps de réaction des équipements tels que le groupe hydromécanique de régulation 2, la pompe 1 et les capteurs non représentés qui sont utilisés pour la régulation.

Cependant, la réactivité du dispositif de transmission 6' pour adapter la vitesse de rotation de la pompe 1 permet de simplifier le groupe hydromécanique de régulation 2 : suppression de la soupape régulatrice pilotée hydrauliquement par la pression différentielle du doseur, de la servovalve de pilotage du doseur et potentiellement l'électro-robinet de survitesse (éléments non décrits sur les figures).

## Revendications

1. Dispositif de transmission (6') destiné à entraîner une pompe (1) à carburant pour une turbomachine à partir d'un axe moteur (26) de ladite turbomachine, comportant un réducteur (11) à train épicycloïdal comprenant trois éléments, un planétaire (11A) central, une couronne (11B) externe et un porte-satellites (11U) dont les satellites (11S) s'engrènent avec le planétaire et la couronne, un premier des trois éléments étant destiné à être relié à l'axe moteur et un second des trois éléments étant destiné à être couplé à un arbre de la pompe, lesdits trois éléments étant mobiles en rotation autour d'un axe du réducteur, le dispositif comportant en outre des premiers moyens électriques (12) agencés pour entraîner en rotation le troisième desdits éléments du réducteur (11), de manière à modifier un rapport de vitesse de rotation entre le premier et le second desdits éléments, **caractérisé en ce que** le dispositif comporte des seconds moyens électriques (13) couplés au premier ou au second desdits éléments du réducteur (11), les premier et second moyens électriques étant agencés pour transférer de la puissance électrique de manière réversible de l'un à l'autre.

2. Dispositif de transmission (6') selon la revendication 1, dans lequel le premier desdits éléments du réducteur (11) est la couronne (11B), le second desdits éléments est le planétaire (11A) et le troisième desdits éléments est le porte-satellites (11U), et dans lequel les seconds moyens électriques (13) sont couplés au premier (11B) desdits trois éléments.

3. Dispositif de transmission (6') selon la revendication 1, **caractérisé en ce que** les seconds moyens électriques (13) sont couplés au second des trois éléments du réducteur.

4. Dispositif de transmission (6') selon la revendication 3, **caractérisé en ce que** le premier desdits trois éléments est la couronne (11B), le second desdits trois éléments est le planétaire (11A), et le troisième desdits trois éléments est le porte-satellites (11U).

5. Dispositif de transmission (6') selon la revendication 3, **caractérisé en ce que** le premier desdits trois éléments est la couronne (11B), le second desdits trois éléments est le porte-satellites (11U), et le troisième desdits trois éléments est le planétaire (11A).

**6.** Dispositif de transmission (6') selon la revendication précédente, **caractérisé en ce qu'**il comprend au moins une roue (16) reliée à l'axe moteur qui engrène par l'extérieur à la couronne (11B) du réducteur.

**7.** Dispositif de transmission (6') selon la revendication précédente, **caractérisé en ce qu'**il comprend au moins une roue complémentaire (17) reliée à l'un desdits premier et second moyens électriques, qui engrène sur le porte-satellites (11U).

**8.** Système d'alimentation en carburant d'une turbomachine comportant une pompe (1) agencée pour fournir un débit de carburant qui est une fonction croissante de la vitesse de rotation (ω1) d'un arbre de ladite pompe et un dispositif de transmission (6') selon l'une des revendications précédentes dans lequel le second desdits éléments est couplé audit arbre de la pompe (1).

**9.** Turbomachine comportant un système d'alimentation selon la revendication précédente.

**10.** Procédé de régulation d'une pompe (1) à carburant pour turbomachine dans un aéronef, un arbre de la pompe étant entraîné par un axe moteur de la turbomachine par des moyens utilisant un dispositif selon la revendication 1, **caractérisé en ce qu'**on modifie la vitesse de rotation de l'arbre de la pompe en pilotant la vitesse de rotation du troisième élément du réducteur par les premiers moyens électriques (12), de manière à ce que le débit de carburant délivré par la pompe soit adapté aux conditions de vol de l'aéronef, et **en ce que** l'on pilote les seconds moyens électriques (13) de manière à fournir de l'énergie électrique aux premiers moyens électriques lorsqu'ils sont moteurs et/ou à absorber l'énergie électrique fournie par les premiers moyens électriques lorsqu'ils sont générateurs.

**Patentansprüche**

**1.** Getriebevorrichtung (6'), die dazu bestimmt ist, eine Kraftstoffpumpe (1) für eine Turbomaschine ausgehend von einer Antriebsachse (26) der Turbomaschine anzusteuern, die ein Untersetzungsgetriebe (11) mit Planetengetriebebezug umfasst, das drei Elemente umfasst, ein zentrales Planetenrad (11A), einen externen Kranz (11B) und einen Satellitenträger (11U), dessen Satellitenräder (11S) in das Planetenrad und den Kranz eingreifen, wobei ein erstes der drei Elemente dazu bestimmt ist, mit der Antriebsachse verbunden zu sein, und ein zweites der drei Elemente dazu bestimmt ist, mit einer Welle der Pumpe gekoppelt zu sein, wobei die drei Elemente in Drehung um eine Achse des Untersetzungsgetriebes beweglich sind, wobei die Vorrichtung weiter erste elektrische Mittel (12) umfasst, die dazu eingerichtet sind, das dritte der Elemente des Untersetzungsgetriebes (11) derart in Drehung anzusteuern, dass ein Drehzahlverhältnis zwischen dem ersten und dem zweiten der Elemente geändert wird, **dadurch gekennzeichnet, dass** die Vorrichtung zweite elektrische Mittel (13), die an das erste oder an das zweite der Elemente des Untersetzungsgetriebes (11) gekoppelt sind, umfasst, wobei das erste und das zweite elektrische Mittel eingerichtet sind, um elektrische Leistung umkehrbar von dem einen zu dem anderen zu transferieren.

**2.** Getriebevorrichtung (6') nach Anspruch 1, wobei das erste der Elemente des Untersetzungsgetriebes (11) der Kranz (11B) ist, das zweite der Elemente das Planetenrad (11A) ist, und das dritte der Elemente der Satellitenträger (11U) ist, und wobei die zweiten elektrischen Mittel (13) an das erste (11B) der drei Elemente gekoppelt sind.

**3.** Getriebevorrichtung (6') nach Anspruch 1, **dadurch gekennzeichnet, dass** die zweiten elektrischen Mittel (13) an das zweite der drei Elemente des Untersetzungsgetriebes gekoppelt sind.

**4.** Getriebevorrichtung (6') nach Anspruch 3, **dadurch gekennzeichnet, dass** das erste der drei Elemente der Kranz (11B) ist, das zweite der drei Elemente das Planetenrad(11A) ist, und das dritte der drei Elemente der Satellitenträger (11U) ist.

**5.** Getriebevorrichtung (6') nach Anspruch 3, **dadurch gekennzeichnet, dass** das erste der drei Elemente der Kranz (11B) ist, das zweite der drei Elemente der Satellitenträger (11U) ist, und das dritte der drei Elemente das Planetenrad (11A) ist.

**6.** Getriebevorrichtung (6') nach dem vorstehenden Anspruch, **dadurch gekennzeichnet, dass** sie mindestens ein Rad (16) umfasst, das mit der Antriebsachse verbunden ist, die über die Außenseite in den Kranz (11B) des Untersetzungsgetriebes eingreift.

**7.** Getriebevorrichtung (6') nach dem vorstehenden Anspruch, **dadurch gekennzeichnet, dass** sie mindestens ein zusätzliches Rad (17) umfasst, das mit einem des ersten und des zweiten elektrischen Mittels, das auf dem Satellitenträger (11U) eingreift, verbunden ist.

8. Kraftstoffversorgungssystem einer Turbomaschine, das eine Pumpe (1) umfasst, die dazu eingerichtet ist, einen Kraftstoffdurchsatz zu liefern, der eine zunehmende Funktion der Drehzahl ($\omega$1) einer Welle der Pumpe ist, und eine Getriebevorrichtung (6') nach einem der vorstehenden Ansprüche, wobei das zweite der Elemente mit der Welle der Pumpe (1) gekoppelt ist.

9. Turbomaschine, die ein Versorgungssystem nach dem vorstehenden Anspruch umfasst.

10. Verfahren zum Regulieren einer Kraftstoffpumpe (1) für Turbomaschine in einem Luftfahrzeug, wobei eine Welle der Pumpe von einer Antriebsachse der Turbomaschine durch Mittel angesteuert wird, die eine Vorrichtung nach Anspruch 1 verwenden, **dadurch gekennzeichnet, dass** die Drehzahl der Welle der Pumpe geändert wird, indem die Drehzahl des dritten Elements des Untersetzungsgetriebes durch die ersten elektrischen Mittel (12) derart gesteuert wird, dass der Kraftstoffdurchsatz, der von der Pumpe geliefert wird, an die Flugbedingungen des Luftfahrzeugs angepasst wird, und dass die zweiten elektrischen Mittel (13) derart gesteuert werden, dass sie elektrische Energie zu den ersten elektrischen Mitteln liefern, wenn sie antreiben und/oder die elektrische Energie, die von den ersten elektrischen Mitteln geliefert wird, absorbieren, wenn sie erzeugen.

**Claims**

1. A transmission device (6') for driving a fuel pump (1) for a turbomachine from a drive shaft (26) of said turbomachine, comprising an epicyclic gear reducer (11) comprising three elements, a central sun gear (11A), an outer ring gear (11B) and a planet carrier (11U), the planets (11S) of which engage with the sun gear and the ring gear, a first of the three elements being intended to be connected to the drive shaft and a second of the three elements being intended to be coupled to a shaft of the pump, said three elements being rotated about a shaft of the reducer, the device further comprising first electrical means (12) arranged so as to rotatably drive the third of said elements of the reducer (11), in such a way as to modify a rotational speed ratio between the first and the second of said elements, **characterised in that** the device comprises second electrical means (13) coupled to the first or the second of said elements of the reducer (11), the first and second electrical means being arranged so as to transfer electrical power reversibly from one to the other.

2. The transmission device (6') according to claim 1, wherein the first of said elements (11) of the reducer is the ring gear (11B), the second of said elements is the sun gear (11A) and the third of said elements is the planet carrier (11U), and wherein the second electrical means (13) are coupled to the first (11B) of said three elements.

3. The transmission device (6') according to claim 1, **characterized in that** the second electrical means (13) are coupled to the second of the three elements of the reducer.

4. The transmission device (6') according to claim 3, **characterized in that** the first of said three elements is the ring gear (11B), the second of said three elements is the sun gear (11A), and the third of said three elements is the planet carrier (11U).

5. The transmission device (6') according to claim 3, **characterized in that** the first of said three elements is the ring gear (11B), the second of said three elements is the planet carrier (11U), and the third of said three elements is the sun gear (11A).

6. The transmission device (6') according to the preceding claim, **characterized in that** it comprises at least one wheel (16) connected to the drive shaft which engages from the outside with the ring gear (11B) of the reducer.

7. The transmission device (6') according to the preceding claim, **characterized in that** it comprises at least one complementary wheel (17) connected to one of said first and second electrical means, which engages on the planet carrier (11U).

8. A fuel supply system for a turbomachine comprising a pump (1) arranged to provide a fuel flow rate which is an increasing function of the rotational speed ($\omega$1) of a shaft of said pump and a transmission device (6') according to one of the preceding claims wherein the second of said elements is coupled to said shaft of the pump (1).

9. A turbomachine comprising a supply system according to the preceding claim.

10. A method for adjusting a fuel pump (1) for a turbomachine in an aircraft, a shaft of the pump being driven by a drive shaft of the turbomachine by means using a device according to claim 1, **characterized in that** the rotational speed of the shaft of the pump is modified by controlling the rotational speed of the third element of the reducer by the first electrical means (12), so that the fuel flow rate delivered by the pump is adapted to the flight conditions of the aircraft, and **in that** the second electrical means (13) are controlled in such a way as to provide electrical energy to the first electrical means when they are motor and/or to absorb the electrical energy supplied by the first electrical means when they are generators.

**Fig. 1**

**Fig. 2**

**Fig. 3**

**Fig. 4a**

**Fig. 4b**

**Fig. 4**

**Fig. 4c**

Fig. 5

Fig. 6

**Fig. 7**

**Fig. 8**

**Fig. 9**

**RÉFÉRENCES CITÉES DANS LA DESCRIPTION**

**Documents brevets cités dans la description**

- FR 2934321 A1
- EP 1359299 A1
- US 2016186670 A1
- EP 2088302 A2